# DEMANDE DE BREVET EUROPEEN

(11) **EP 3 900 583 A1**
(43) Date de publication de la demande: **27.10.2021**
(21) Numéro de dépôt: 21169052.4
(22) Date de dépôt: 19.04.2021
(51) Int. Cl.: A47G 29/14, A47G 29/16, B65G 65/00, B60P 3/00

(54) **SYSTÈME AUTOMATISÉ DE LIVRAISON ET/OU DE RETRAIT DE COLIS AU MOYEN D'UN ROBOT LIVREUR**

(30) Priorité: 21.04.2020 FR 2003987
(71) Demandeur: Société Renz Sarl (Société à Responsabilité Limitée), 57915 Woustviller (FR)
(72) Inventeur: SUPERNAT, Thierry, 57670 NEBING (FR); HELMSTETTER, Marc, 67320 SIEWILLER (FR)
(74) Mandataire: Cabinet Nuss

(57) **Abrégé**

La présente invention concerne un système automatisé de livraison et/ou de retrait de colis comprenant, d'une part, au moins une boîte à colis (1) fixe, avec au moins une ouverture d'accès (2) contrôlée par une unité de commande (3), et faisant partie d'un ensemble (1') de boîtes de dépôt/retrait de colis et/ou de boîtes postales, et, d'autre part, au moins un véhicule autonome (4) de transport de colis avec au moins un compartiment (5) de réception de colis pourvu d'une ouverture commandée, l'unité de commande (3) et le robot livreur (4) étant pourvus de moyens de communication mutuelle.

Système caractérisé en ce que ladite au moins une boîte à colis (1) et le robot livreur (4) comportent des moyens complémentaires (6, 7) de liaison pour l'établissement d'un accouplement mécanique rigide temporaire entre eux, lorsque les ouvertures respectives de ladite boîte à colis (1) et dudit compartiment de réception (5) du robot livreur (4) sont mutuellement en regard et aboutantes, l'établissement et l'interruption dudit accouplement mécanique par coopération opérationnelle desdits moyens complémentaires respectifs (6, 7) entre eux étant soit commandés directement par le déplacement du moyen (2') de fermeture de l'ouverture d'accès (2) de la boîte à colis (1) considérée, soit commandé par le robot livreur (4).

## Description

[La présente invention concerne le domaine de la livraison automatisée de colis par le biais de véhicules de transport autonomes du type robots livreurs, notamment au niveau de boîtes à colis équipant des immeubles résidentiels, et a pour objet un système automatisé et sécurisé de livraison/retrait de colis, ainsi qu'un procédé de dépose et/ou de retrait automatisé correspondant.

De nombreuses solutions de livraisons automatisées de colis, mettant en œuvre des véhicules autonomes de transport de colis (robots livreurs), ont déjà été proposées.

Toutefois, l'un des aspects critiques de ce type de livraison, constituant un point faible non encore résolu de manière satisfaisante à ce jour, est le moment du transfert du colis du robot vers la boîte à colis, à l'instar par exemple du transfert d'argent liquide entre un véhicule de transport blindé et un point de dépôt ou de retrait (banque, supermarché, DAB, ...). Durant cette phase opératoire, il faut non seulement que le positionnement relatif coïncidant des deux ouvertures soit garanti, mais également qu'un passage protégé du colis entre les deux compartiments soit créé.

En effet, si une connexion physique précise, robuste et sécurisée contre les intrusions n'est pas assurée à ce moment-là, ou à tout le moins lorsque le compartiment contenant le colis est ouvert, la livraison peut échouer (dysfonctionnement), ou le colis être subtilisé par effraction, en séparant le robot de la boîte à colis de manière ciblée durant cette phase.

La présente invention a pour but principal de fournir une solution simple et fiable permettant de répondre à la demande exprimée ci-dessus.

A cet effet, elle a pour objet un système automatisé de livraison et/ou de retrait de colis ou objets analogues comprenant, d'une part, au moins une boîte à colis fixe, avec au moins une ouverture d'accès contrôlée par une unité de commande, et faisant avantageusement partie d'un ensemble de boîtes de dépôt/retrait de colis et/ou de boîtes postales, et, d'autre part, au moins un véhicule autonome de transport de colis, du type robot livreur roulant, avec au moins un compartiment de réception de colis pourvu d'une ouverture commandée, l'unité de commande et le robot livreur étant pourvus de moyens de communication mutuelle, préférentiellement du type radiofréquence,
système caractérisé en ce que ladite au moins une boîte à colis et le robot livreur comportent des moyens complémentaires de liaison pour l'établissement d'un accouplement mécanique rigide temporaire entre eux, lorsque les ouvertures respectives de ladite boîte à colis et dudit compartiment de réception du robot livreur sont mutuellement en regard, et préférentiellement aboutantes, l'établissement et l'interruption dudit accouplement mécanique par coopération opérationnelle desdits moyens complémentaires respectifs entre eux étant soit commandés directement par le déplacement du moyen de fermeture de l'ouverture d'accès de la boîte à colis considérée, soit commandés par le robot livreur, ce avant tout dégagement de ladite ouverture d'accès, respectivement après fermeture complète de cette dernière, par déplacement dudit moyen de fermeture.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1A] est une vue en élévation d'un système automatisé selon une première variante de l'invention, avec un ensemble collectif de boîtes à colis et de boîtes à lettres et un robot livreur pour la dépose de colis, ledit ensemble comportant trois boîtes à colis selon l'invention (c'est-à-dire aptes à interagir et à coopérer avec le robot) en partie inférieure, des ouvertures d'accès n'étant présentes que sur le côté visible de l'ensemble (accès unilatéral) ;
[Fig. 1B] et
[Fig. 1C] sont des vues en perspective selon deux directions différentes d'un système automatisé selon l'invention, comprenant un ensemble collectif de boîtes à colis et de boîtes à lettres et des robots livreurs pour la dépose et le retrait de colis, ledit ensemble comportant trois boîtes à colis selon l'invention (c'est-à-dire aptes à interagir et à coopérer avec les robots) en partie inférieure (ces boîtes à colis étant pourvues de deux ouvertures d'accès opposées - accès bilatéral) et la figure 1B illustrant une phase de livraison, alors que la figure 1C illustre une phase de retrait ;
[Fig. 2] représente un robot livreur des figures 1 vu en perspective selon un premier mode de réalisation de l'invention ;
[Fig. 3] est une vue à une autre échelle du détail A de la figue 2 ;
[Fig. 4] est une vue en perspective coté frontal (coté première ouverture d'accès pour la livraison) d'une boîte à colis selon un premier mode de réalisation de l'invention ;
[Fig. 5A] et
[Fig. 5B] sont des vues à une autre échelle de la région de la partie basse (seuil) de l'ouverture d'accès de la boîte à colis de la figure 4 (la figure 5B étant une vue partiellement par transparence illustrant les moyens de liaison et mécanisme associé) ;
[Fig. 6A] et
[Fig. 6B] sont des vues respectivement en perspective et en élévation latérale, illustrant un robot livreur positionné en regard et au contact de l'ouverture d'accès de la boîte à colis de la figure 4, alors que ladite ouverture est encore obturée et que l'accouplement mécanique n'est pas encore réalisé, l'une des parois latérales de ladite boîte ayant été enlevée (vue partiellement écorchée) ;
[Fig. 7] est une vue partielle et à une autre échelle de l'objet de la figure 6A, sur laquelle seuls le seuil et le volet de fermeture de la boîte à colis sont représentés ;
[Fig. 8] est une vue à une autre échelle du détail B de la figure 7 ;
[Fig. 9A] et
[Fig. 9B] sont des vues identiques à celles respectivement des figures 6A et 6B, à la différence près que l'accouplement mécanique est effectif et que l'ouverture d'accès est partiellement dégagée ;
[Fig. 10] et
[Fig. 11] sont des vues similaires à celles des figures 7 et 8 respectivement, mais de l'objet des figures 9 ;
[Fig. 12A] est une vue similaire à celle de la figure 3 illustrant les moyens de liaison du robot livreur en accord avec un second mode de réalisation de l'invention ;
[Fig. 12B] est une vue similaire à celle de la figure 10 en relation avec le second mode de réalisation de l'invention, et,
[Fig. 13] est une vue similaire à celle de la figure 1A ou 1B illustrant un système selon une variante de réalisation de l'invention avec un ensemble de boîtes à colis comprenant trois boîtes à colis superposées et un robot livreur équipé soit de plusieurs compartiments superposés, soit d'un compartiment réglable en hauteur ou pourvu d'étagères réglables en hauteur.

Les figures annexées illustrent, pour certaines seulement en partie, un système automatisé de livraison et/ou de retrait de colis ou d'objets analogues.

Ce système comprend, d'une part, au moins une boîte à colis (1) fixe, avec au moins une ouverture d'accès (2) contrôlée par une unité de commande (3), et faisant avantageusement partie d'un ensemble (1') de boîtes de dépôt/retrait de colis et/ou de boîtes postales, et, d'autre part, au moins un véhicule autonome (4) de transport de colis, du type robot livreur roulant, avec au moins un compartiment (5) de réception de colis pourvu d'une ouverture (5') commandée, l'unité de commande (3) et le robot livreur (4) étant pourvus de moyens de communication mutuelle, préférentiellement du type radiofréquence.

L'unité de commande 3 peut, par exemple, être intégrée à une borne de communication formant interface homme/machine, pour un possible dépôt/retrait d'un colis ou d'une lettre par une personne.

Conformément à l'invention, ladite au moins une boîte à colis (1) et le robot livreur (4) comportent des moyens complémentaires (6, 7) de liaison pour l'établissement d'un accouplement mécanique rigide temporaire entre eux, lorsque les ouvertures respectives (2, 5') de ladite boîte à colis (1) et dudit compartiment de réception (5) du robot livreur (4) sont mutuellement en regard, et préférentiellement aboutantes.

L'établissement et l'interruption dudit accouplement mécanique par coopération opérationnelle desdits moyens complémentaires respectifs (6, 7) entre eux peuvent être soit commandés directement par le déplacement du moyen (2') de fermeture de l'ouverture d'accès (2) de la boîte à colis (1) considérée, soit commandés par le robot livreur (4), ce avant tout dégagement de ladite ouverture d'accès (2), respectivement après fermeture complète de cette dernière, par déplacement dudit moyen de fermeture (2').

Dans le premier cas précité, il s'agit d'une commande mécanique contrôlée par le mouvement du moyen (2'), alors que, dans le second cas, la commande est de nature électronique et est contrôlée par le robot livreur (4). Ce dernier peut bien entendu également conditionner l'ouverture de son compartiment (5) à l'établissement effectif dudit accouplement. Pour ce faire, le robot livreur (4) peut comporter un moyen de détection de l'établissement de l'accouplement mécanique avec une boîte à colis (1).

Grâce aux dispositions précitées, l'invention permet, d'une part, de s'assurer concrètement (physiquement) que robot et boîte à colis sont positionnés correctement avant le transfert du colis et, d'autre part, de fournir les conditions matérielles pour que le transfert s'effectue de manière sécurisée.

De manière simple et efficace, il peut être prévu que l'accouplement mécanique rigide, résultant d'une coopération par engagement ou venue en prise mutuel(le) des moyens de liaison complémentaires (6, 7), soit verrouillé par défaut lorsque le moyen de fermeture (2') est situé en dehors de sa position d'obturation totale de l'ouverture d'accès (2) de la boîte à colis considérée (1), par exemple sous l'action d'au moins un moyen (8) de sollicitation élastique.

Afin de répartir les possibles sollicitations et aboutir à un positionnement précis entre robot et boîte à colis, l'accouplement mécanique rigide comprend avantageusement au moins deux points de liaisonnement (9, 9') distincts et espacés, résultant chacun de la coopération opérationnelle d'un couple de moyens de liaison (6, 7) complémentaires, dont l'un (6) appartient à la boîte à colis (1) et l'autre (7) au robot livreur (4).

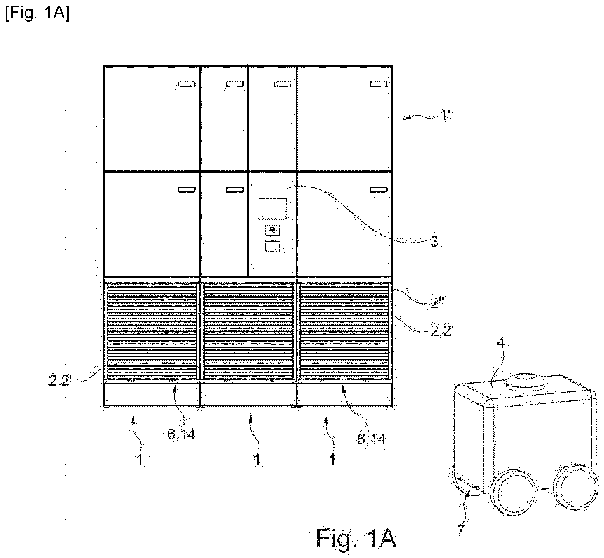

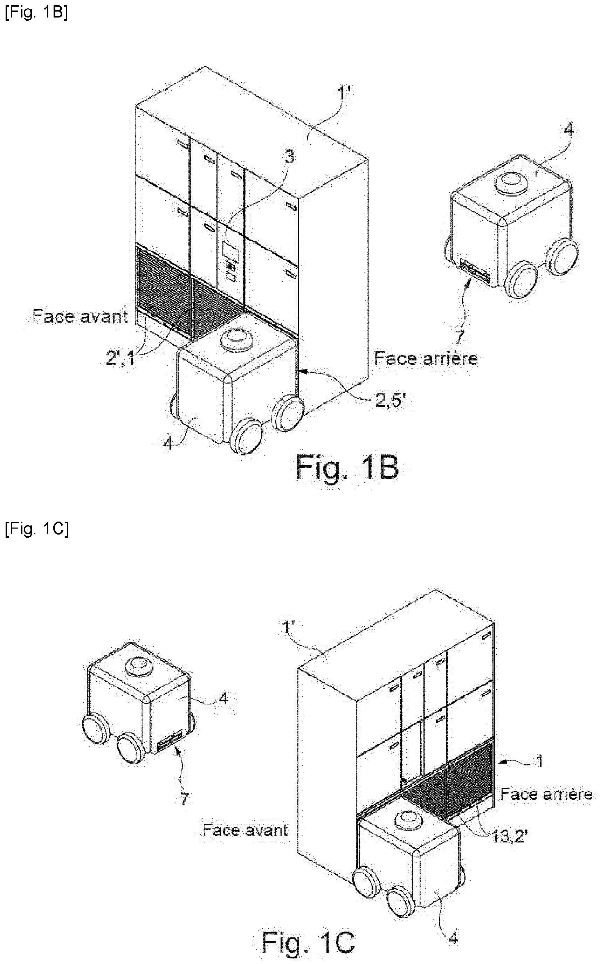

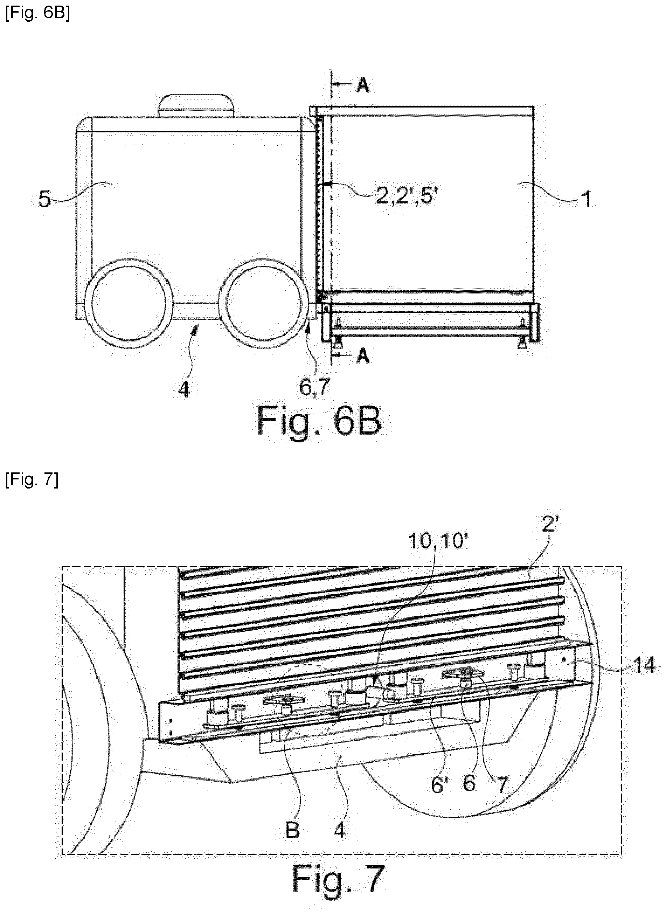

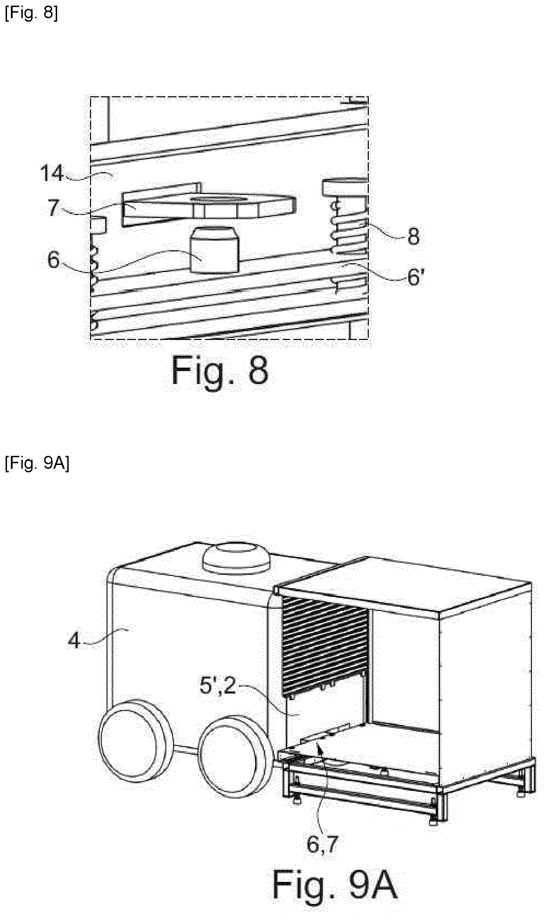

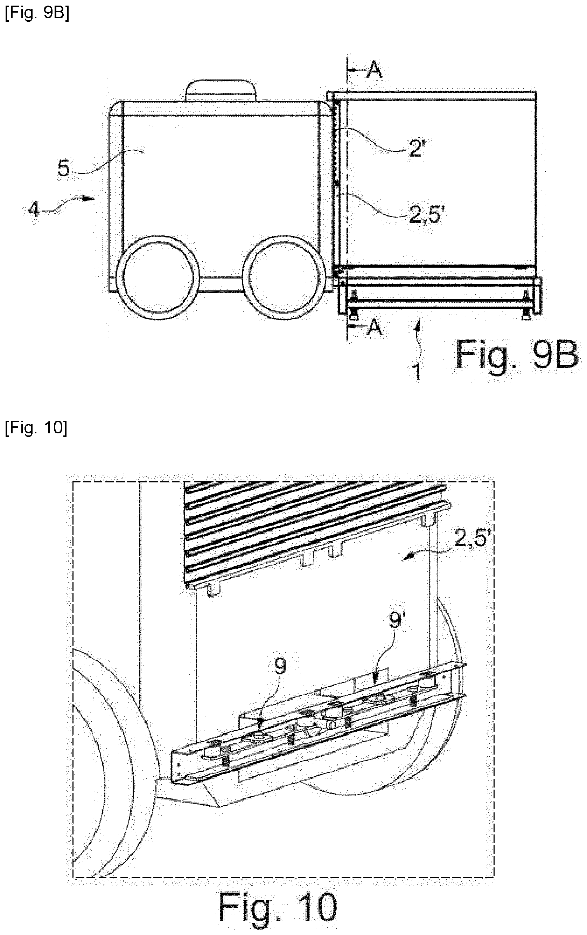

En accord avec une construction pratique préférée, les moyens de liaison complémentaires (6, 7) sont montés au niveau de parties inférieures des bords périphériques (2", 5") des ouvertures respectives (2, 5') de la boîte à colis (1) et du compartiment de réception (5) du robot livreur (4). Comme le montrent les figures 1, 4, 6, 9 et 10, ces ouvertures (2, 5') présentent des formes carrées ou rectangulaires concordantes entre elles. De plus, pour autoriser leur mouvement lorsque les deux ouvertures (2) et (5') sont accolées l'une à l'autre, le déplacement de leurs moyens de fermeture s'effectue dans les plans respectifs de ces dernières et dans les volumes internes de la boîte à colis (1) et du compartiment de réception (5) respectivement.

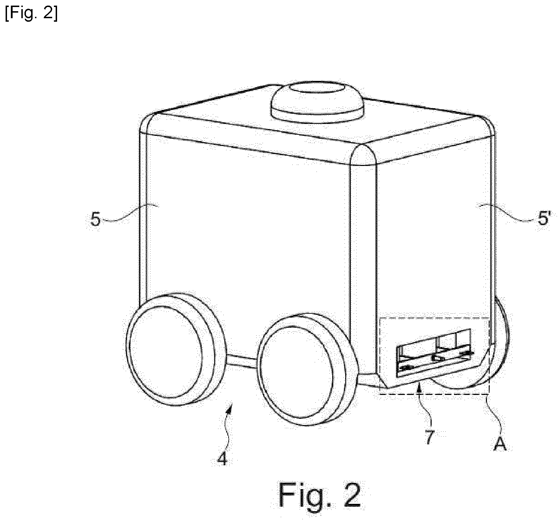

En accord avec un premier mode de réalisation de l'invention, ressortant des figures 2 à 10, les moyens complémentaires de liaison comprennent au moins un, préférentiellement au moins deux, couple(s) de moyens (6, 7) du type mâle-femelle coopérants, chaque couple intégrant, d'une part, un anneau de bridage saillant (7) faisant partie du robot livreur (4) et, d'autre part, un ergot ou doigt mobile (6), par exemple déplacé par sollicitation élastique, faisant partie de la boîte à colis (1), en étant avantageusement monté dans le cadre ou bord périphérique (2") entourant son ouverture d'accès (2), ou dans un profilé ou une goulotte (14) rapporté(e) sous cette ouverture, chaque couple de moyens coopérants (6, 7) constituant un point de liaisonnement (9, 9') spécifique lorsque ces moyens sont mutuellement assemblés ou engagés.

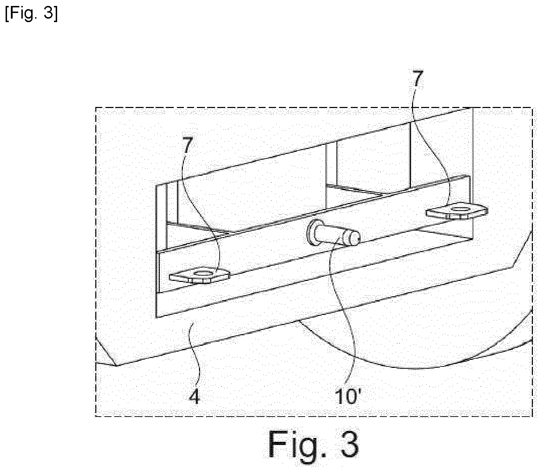

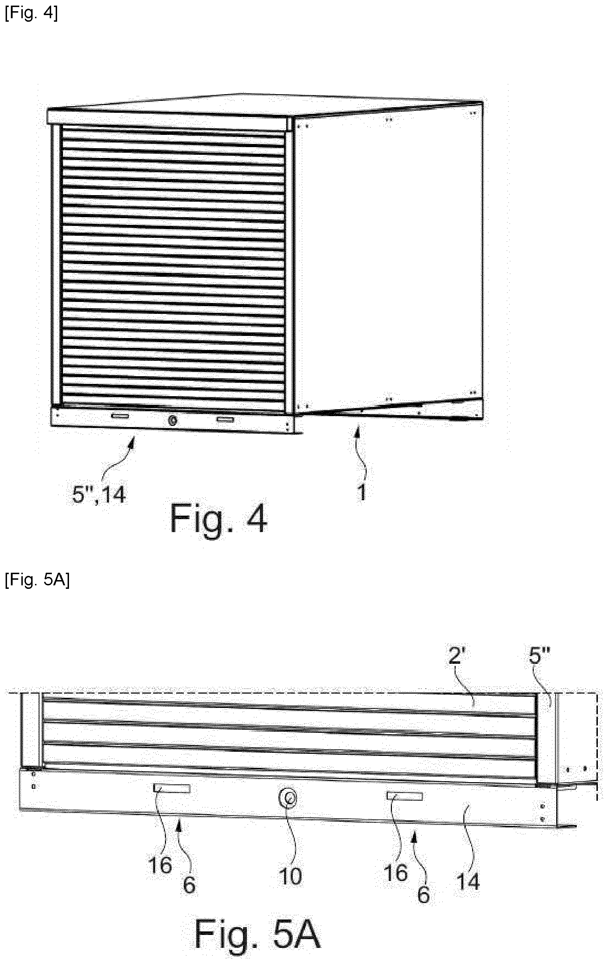

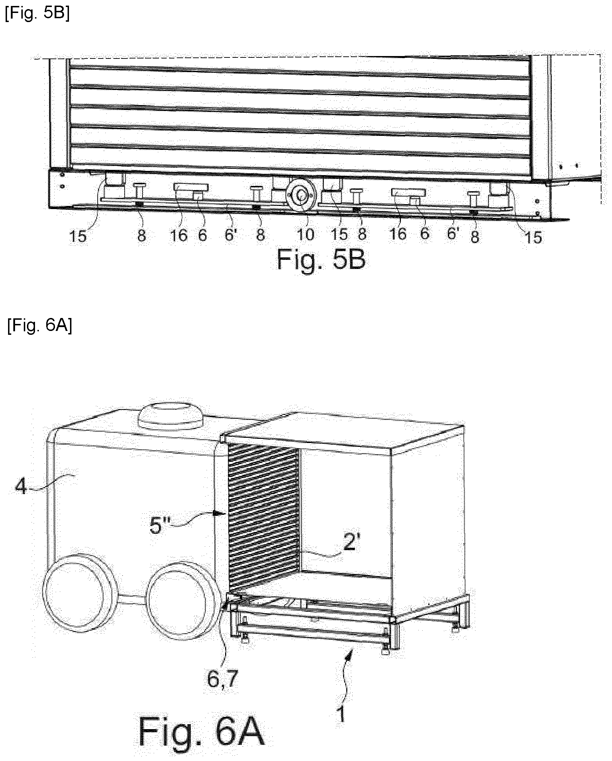

Conformément à une variante constructive avantageuse de ce premier mode, illustrée aux figures 3, 5, 7, 8, 10 et 11, le ou chaque doigt ou ergot (6) est solidaire d'une platine (6') montée mobile dans une portion de cadre de la boîte à colis (1), formant le seuil ou la partie inférieur(e) du bord (2") de l'ouverture d'accès (2) de cette dernière, ou rapportée sous ce seuil, et dans laquelle l'anneau de bridage (7) s'étend en vue de la réalisation de l'accouplement. Ladite platine (6') est déplacée par le moyen de fermeture (2') dans une position d'absence d'engagement possible du doigt (6) avec l'anneau (7) correspondant, ce en configuration d'obturation totale de l'ouverture d'accès (2) et à l'encontre d'une sollicitation élastique tendant à réaliser et à verrouiller ledit engagement dans une configuration coïncidente de l'anneau (7) et du doigt (6), par exemple produite par au moins un moyen élastique (8) agissant sur la platine (6') correspondante. Autrement dit, les moyens de liaison de la boîte à colis ne sont dans une configuration déverrouillée que lorsque l'ouverture d'accès de cette dernière est totalement obturée. Préférentiellement, chaque platine (par exemple deux platines (6') distinctes avec chacune au moins un moyen de liaison 6) est guidée de manière multiple et est sollicitée également par plusieurs moyens élastiques répartis (par exemple un ressort de compression (8) associé à chaque rail ou tige de guidage- voir figures 5B, 8 et 11).

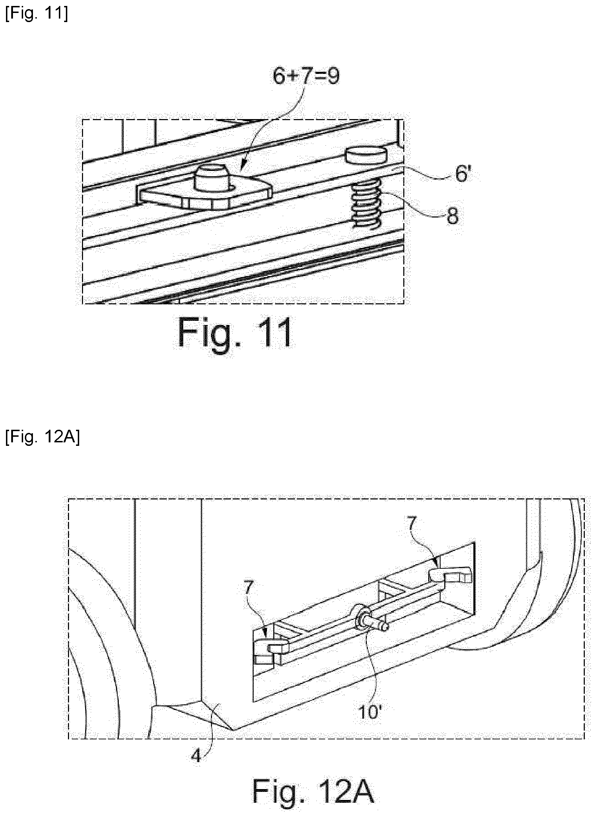

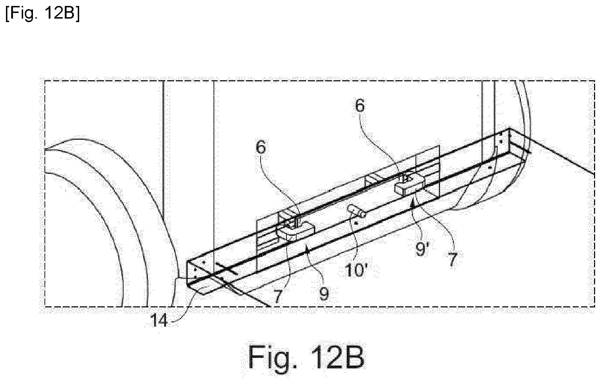

En accord avec un second mode de réalisation, illustré sur les figures 12, les moyens complémentaires de liaison comprennent au moins deux couples de moyens (6, 7) coopérants qui intègrent, d'une part, une paire de griffes de bridage (7), faisant partie du robot livreur (4) et mobiles en rotation et/ou en translation entre des positions rétractée et déployée, ce sous l'action d'un moyen élastique ou d'un actionneur, et, d'autre part, deux sites d'accrochage (6) faisant partie de la boîte à colis (1), sur ou dans lesquels lesdites griffes (7) peuvent venir en prise dans leur état déployé, par exemple les bords (6) d'ouvertures d'une plaque ou d'un profilé faisant partie du cadre ou bord (2") entourant l'ouverture d'accès (2'), voire d'une plaque ou d'un profilé (14) rapporté(e) au niveau du seuil de ladite ouverture (2').

Dans les deux modes de réalisation précités, les ouvertures (16) ménagées dans la plaque, le profilé ou la goulotte (14) pour le passage des anneaux ou des griffes (7) sont adaptées en taille et dimensions à ces éléments pour une réception traversante avec un jeu faible.

En vue d'augmenter davantage encore la précision du raccordement robot/boîte à colis et éventuellement aussi faciliter l'atteinte du positionnement recherché, il peut être prévu que la boîte à colis (1) et le robot livreur (4) comportent également des moyens respectifs (10, 10'), mutuellement complémentaires, d'indexation en position lors de la réalisation de leur accouplement mécanique, ces moyens (10, 10') réalisant, en outre, par coopération mutuelle un guidage avec centrage du robot livreur (4) au moins lors de la phase finale de rapprochement à des fins de livraison ou de retrait avec la boîte à colis (1).

Avantageusement, les moyens complémentaires d'indexation en position comprennent, d'une part, au moins une formation saillante (10'), telle qu'une tige, un ergot ou une colonne, faisant partie du robot livreur (4), et, d'autre part, au moins une ouverture ou cavité (10) évasée vers l'extérieur, pour la réception de ladite formation (10'), et présente au niveau de la boîte à colis (1), par exemple dans une partie de cadre ou de bord périphérique (2") formant seuil inférieur de son ouverture d'accès (2), ou dans un profilé ou une goulotte rapporté(e) à ce niveau.

Selon d'autres caractéristiques possibles de l'invention, il peut être prévu que :
- le moyen de fermeture (2') de ladite au moins une ouverture d'accès (2) de ladite au moins une boîte à colis (1) consiste en un tablier coulissant segmenté, du type volet roulant, avec escamotage vers le haut (le moyen de fermeture de l'ouverture du compartiment du robot peut être du même type, ces deux moyens étant déplacés par des actionneurs correspondants),
- les bords ou cadres périphériques (2", 5") délimitant respectivement les ouvertures (2, 5') de la boîte à colis (1) et du compartiment de réception (5) du robot livreur (4) présentent des surfaces extérieures ou feuillures à profils de formes mutuellement complémentaires, par exemple avec des épaulements et des décrochements conjugués formant par imbrication mutuelle une chicane,
- le fond du compartiment de réception (5) du robot livreur (4) est constitué par un support mobile du type convoyeur à tapis ou à rouleaux, la boîte à colis (1) présentant éventuellement un support de fond mobile de type similaire.

Afin de pouvoir également mettre en œuvre un retrait automatisé d'un colis déposé, la boîte à colis (1) au moins présente peut comporter une seconde ouverture d'accès (13), située à l'opposé de sa première ouverture d'accès (2), cette seconde ouverture (13) étant équipée de moyen(s) de liaison similaires à ceux (6) équipant la première ouverture (2) pour réaliser un accouplement mécanique avec un robot livreur (4) du type précité, c'est-à-dire équipé lui de moyens de liaison complémentaires (7) - voir figures 1B et 1C.

Le retrait par un robot (4) pourrait bien entendu aussi avoir lieu en relation avec la variante de la figure 1A (dépose et retrait par le même côté et la même ouverture d'accès). Dans les deux variantes, le robot (4) et/ou la boîte à colis (1) comporte(nt) des moyens de transfert du colis à déposer/retirer de l'un vers l'autre (non représentés).

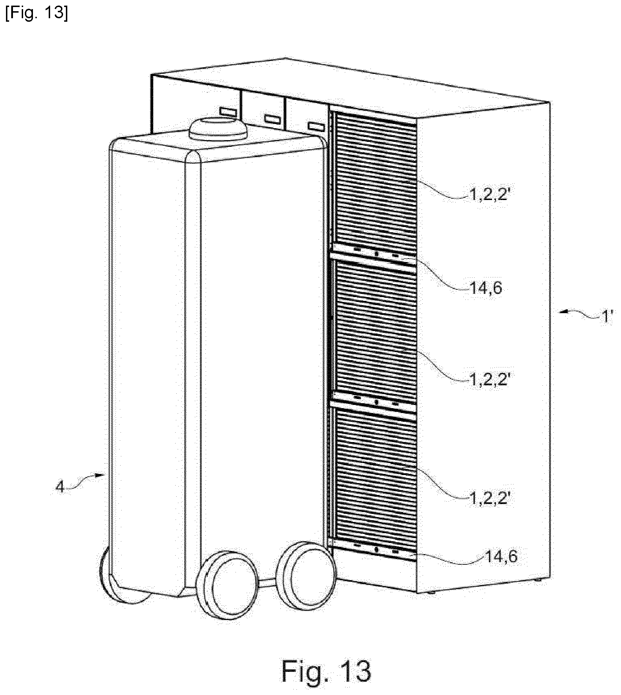

En accord avec une autre variante constructive, ressortant de la figure 13 à titre d'exemple, l'ensemble de boîtes à colis (1') comprend au moins deux boîtes à colis superposées (1) équipées chacune d'au moins un moyen de liaison (6) pour la réalisation d'un accouplement rigide avec un robot livreur (4) équipé soit de plusieurs compartiments superposés pourvus chacun d'au moins un moyen de liaison complémentaire (7), soit d'un compartiment réglable en hauteur muni d'au moins un moyen de liaison complémentaire (7).

L'invention concerne également un procédé automatisé de dépose et/ou de retrait de colis au niveau d'au moins une boîte à colis (1) fixe, avec au moins une ouverture d'accès (2) contrôlée par une unité de commande (3), et faisant avantageusement partie d'un ensemble (1') de boîtes de dépôt/retrait de colis et/ou de boîtes postales, ledit procédé mettant en œuvre au moins un véhicule autonome (4) de transport de colis, du type robot livreur roulant, avec au moins un compartiment (5) de réception de colis pourvu d'une ouverture commandée (5'), l'unité de commande (3) et le robot livreur (4) étant pourvus de moyens de communication mutuelle, préférentiellement du type radiofréquence.

Ce procédé est caractérisé en ce que ladite au moins une boîte à colis (1) et ledit au moins un robot livreur (4) font partie d'un système tel que décrit ci-dessus.

Ce procédé peut par exemple consister, pour une opération de dépose/livraison d'un colis, à réaliser les opérations suivantes :
- le robot chargé du colis se présente devant l'ensemble de boîtes à colis/lettres dans lequel le colis doit être déposé,
- le robot entre en communication avec l'unité de commande de l'ensemble,
- cette unité indique au robot quelle boîte est disponible, le guidage de ce dernier à proximité pouvant être réalisé par l'intermédiaire de capteurs,
- le robot se met en position devant la boîte disponible et envoie un message à l'unité pour indiquer qu'il est en position finale de raccordement des ouvertures,
- l'ouverture de la boîte se réalise et active l'accouplement par bridage du robot à la boîte,
- le transfert du colis est réalisé,
- le robot et/ou la boîte signale à l'unité que le colis a été déposé,
- l'ouverture d'accès de la boîte se referme et libère le robot en libérant l'accouplement.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Système automatisé de livraison et/ou de retrait de colis ou objets analogues comprenant, d'une part, au moins une boîte à colis (1) fixe, avec au moins une ouverture d'accès (2) contrôlée par une unité de commande (3), et faisant avantageusement partie d'un ensemble (1') de boîtes de dépôt/retrait de colis et/ou de boîtes postales, et, d'autre part, au moins un véhicule autonome (4) de transport de colis, du type robot livreur roulant, avec au moins un compartiment (5) de réception de colis pourvu d'une ouverture (5') commandée, l'unité de commande (3) et le robot livreur (4) étant pourvus de moyens de communication mutuelle, préférentiellement du type radiofréquence, système **caractérisé en ce que** ladite au moins une boîte à colis (1) et le robot livreur (4) comportent des moyens complémentaires (6, 7) de liaison pour l'établissement d'un accouplement mécanique rigide temporaire entre eux, lorsque les ouvertures respectives (2, 5') de ladite boîte à colis (1) et dudit compartiment de réception (5) du robot livreur (4) sont mutuellement en regard, et préférentiellement aboutantes, l'établissement et l'interruption dudit accouplement mécanique par coopération opérationnelle desdits moyens complémentaires respectifs (6, 7) entre eux étant soit commandés directement par le déplacement du moyen (2') de fermeture de l'ouverture d'accès (2) de la boîte à colis (1) considérée, soit commandé par le robot livreur (4), ce avant tout dégagement de ladite ouverture d'accès (2), respectivement après fermeture complète de cette dernière, par déplacement dudit moyen de fermeture (2').

2. Système selon la revendication 1, **caractérisé en ce que** l'accouplement mécanique rigide, résultant d'une coopération par engagement ou venue en prise mutuel(le) des moyens de liaison complémentaires (6, 7), est verrouillé par défaut lorsque le moyen de fermeture (2') est situé en dehors de sa position d'obturation totale de l'ouverture d'accès (2) de la boîte à colis considérée (1), par exemple sous l'action d'au moins un moyen (8) de sollicitation élastique.

3. Système selon l'une quelconque des revendications 1 et 2, **caractérisé en ce que** l'accouplement mécanique rigide comprend au moins deux points de liaisonnement (9, 9') distincts et espacés, résultant chacun de la coopération opérationnelle d'un couple de moyens de liaison (6, 7) complémentaires, dont l'un (6) appartient à la boîte à colis (1) et l'autre (7) au robot livreur (4).

4. Système selon l'une quelconque des revendications 1 à 3, **caractérisé en ce que** les moyens de liaison complémentaires (6 , 7) sont montés au niveau de parties inférieures des bords périphériques (2", 5") des ouvertures respectives (2, 5') de la boîte à colis (1) et du compartiment de réception (5) du robot livreur (4), ces ouvertures (2, 5') présentant des formes carrées ou rectangulaires concordantes entre elles et le déplacement des moyens de fermeture de ces ouvertures (2, 5') s'effectuant dans les plans respectifs de ces dernières et dans les volumes internes de la boîte à colis (1) et du compartiment de réception (5) respectivement.

5. Système selon l'une quelconque des revendications 1 à 4, **caractérisé en ce que** les moyens complémentaires de liaison comprennent au moins un, préférentiellement au moins deux, couple(s) de moyens (6, 7) du type mâle-femelle coopérants, chaque couple intégrant, d'une part, un anneau de bridage saillant (7) faisant partie du robot livreur (4) et, d'autre part, un ergot ou doigt mobile (6), par exemple déplacé par sollicitation élastique, faisant partie de la boîte à colis (1), en étant avantageusement monté dans le cadre ou bord périphérique (2") entourant son ouverture d'accès (2), ou dans un profilé ou une goulotte (14) rapporté(e) sous cette ouverture, chaque couple de moyens coopérants (6, 7) constituant un point de liaisonnement (9, 9') spécifique lorsque ces moyens sont mutuellement assemblés ou engagés.

6. Système selon la revendication 5, **caractérisé en ce que** le ou chaque doigt ou ergot (6) est solidaire d'une platine (6') montée mobile dans une portion de cadre de la boîte à colis (1), formant le seuil ou la partie inférieur(e) du bord (2") de l'ouverture d'accès (2) de cette dernière, ou rapportée sous ce seuil, et dans laquelle l'anneau de bridage (7) s'étend en vue de la réalisation de l'accouplement, ladite platine (6') étant déplacée par le moyen de fermeture (2') dans une position d'absence d'engagement possible du doigt (6) avec l'anneau (7) correspondant, ce en configuration d'obturation totale de l'ouverture d'accès (2) et à l'encontre d'une sollicitation élastique tendant à réaliser et à verrouiller ledit engagement dans une configuration coïncidente de l'anneau (7) et du doigt (6), par exemple produite par au moins un moyen élastique (8) agissant sur la platine (6') correspondante .

7. Système selon l'une quelconque des revendications 1 à 4, **caractérisé en ce que** les moyens complémentaires de liaison comprennent au moins deux couples de moyens (6, 7) coopérants intégrant, d'une part, une paire de griffes de bridage (7), faisant partie du robot livreur (4) et mobiles en rotation et/ou en translation entre des positions rétractée et déployée, ce sous l'action d'un moyen élastique ou d'un actionneur, et, d'autre part, deux sites d'accrochage (6) faisant partie de la boîte à colis (1), sur ou dans lesquels lesdites griffes (7) peuvent venir en prise dans leur état déployé, par exemple les bords (6) d'ouvertures d'une plaque ou d'un profilé faisant partie du cadre ou bord (2") entourant l'ouverture d'accès (2'), voire d'une plaque ou d'un profilé (14) rapporté(e) au niveau du seuil de ladite ouverture (2').

8. Système selon l'une quelconque des revendications 1 à 7, **caractérisé en ce que** la boîte à colis (1) et le robot livreur (4) comportent également des moyens respectifs (10, 10'), mutuellement complémentaires, d'indexation en position lors de la réalisation de leur accouplement mécanique, ces moyens (10, 10') réalisant en outre par coopération mutuelle un guidage avec centrage du robot livreur (4) au moins lors de la phase finale de rapprochement à des fins de livraison ou de retrait avec la boîte à colis (1).

9. Système selon la revendication 8, **caractérisé en ce que** les moyens complémentaires d'indexation en position comprennent, d'une part, au moins une formation saillante (10'), telle qu'une tige, un ergot ou une colonne, faisant partie du robot livreur (4), et, d'autre part, au moins une ouverture ou cavité (10) évasée vers l'extérieur, pour la réception de ladite formation (10'), et présente au niveau de la boîte à colis (1), par exemple dans une partie de cadre ou de bord périphérique (2") formant seuil inférieur de son ouverture d'accès (2), ou dans un profilé ou une goulotte rapporté(e) à ce niveau.

10. Système selon l'une quelconque des revendications 1 à 9, **caractérisé en ce que** le moyen de fermeture (2') de ladite au moins une ouverture d'accès (2) de ladite au moins une boîte à colis (1) consiste en un tablier coulissant segmenté, du type volet roulant, avec escamotage vers le haut.

11. Système selon l'une quelconque des revendications 1 à 10, **caractérisé en ce que** les bords ou cadres périphériques (2", 5") délimitant respectivement les ouvertures (2, 5') de la boîte à colis (1) et du compartiment de réception (5) du robot livreur (4) présentent des surfaces extérieures ou feuillures à profils de formes mutuellement complémentaires, par exemple avec des épaulements et des décrochements conjugués formant par imbrication mutuelle une chicane.

12. Système selon l'une quelconque des revendications 1 à 11, **caractérisé en ce que** le fond du compartiment de réception (5) du robot livreur (4) est constitué par un support mobile du type convoyeur à tapis ou à rouleaux, la boîte à colis (1) présentant éventuellement un support de fond mobile de type similaire.

13. Système selon l'une quelconque des revendications 1 à 12, **caractérisé en ce que** le robot livreur (4) comporte un moyen de détection de l'établissement de l'accouplement mécanique avec une boîte à colis (1).

14. Système selon l'une quelconque des revendications 1 à 13, **caractérisé en ce que** la boîte à colis (1) au moins présente comporte une seconde ouverture d'accès (13), située à l'opposé de sa première ouverture d'accès (2), cette seconde ouverture (13) étant équipée de moyen(s) de liaison similaires à ceux équipant la première ouverture (2) pour réaliser un accouplement mécanique avec un robot livreur (4).

15. Système selon l'une quelconque des revendications 1 à 14, **caractérisé en ce que** l'ensemble de boîtes à colis (1') comprend au moins deux boîtes à colis superposées (1) équipées chacune d'au moins un moyen de liaison (6) pour la réalisation d'un accouplement rigide avec un robot livreur (4) équipé soit de plusieurs compartiments superposés pourvus chacun d'au moins un moyen de liaison complémentaire (7), soit d'un compartiment réglable en hauteur muni d'au moins un moyen de liaison complémentaire (7).

16. Procédé automatisé de dépose et/ou de retrait de colis au niveau d'au moins une boîte à colis (1) fixe, avec au moins une ouverture d'accès (2) contrôlée par une unité de commande (3), et faisant avantageusement partie d'un ensemble (1') de boîtes de dépôt/retrait de colis et/ou de boîtes postales, ledit procédé mettant en œuvre au moins un véhicule autonome (4) de transport de colis, du type robot livreur roulant, avec au moins un compartiment (5) de réception de colis pourvu d'une ouverture commandée (5'), l'unité de commande (3) et le robot livreur (4) étant pourvus de moyens de communication mutuelle, préférentiellement du type radiofréquence,
procédé **caractérisé en ce que** ladite au moins une boîte à colis (1) et ledit au moins un robot livreur (4) font partie d'un système selon l'une quelconque des revendications 1 à 15.
